# EUROPEAN PATENT SPECIFICATION

(11) **EP 1 463 178 B1**
(45) Date of publication and mention of the grant of the patent: **25.06.2008**
(21) Application number: 04005655.8
(22) Date of filing: 10.03.2004
(51) Int. Cl.: H02J 9/00

(54) **Power generating device**
Energieerzeugungsvorrichtung
Dispositif de production d'energie

(30) Priority: 13.03.2003 JP 2003067966
(43) Date of publication of application: 29.09.2004
(73) Proprietor: HONDA MOTOR CO., LTD., Tokyo 107-8556 (JP)
(72) Inventor: Eguchi, Hiroyuki, Wako-shi Saitama 351-0193 (JP); Shimizu, Motohiro, Wako-shi Saitama 351-0193 (JP)
(74) Representative: HOFFMANN EITLE

(56) References cited:
- EP-A- 1 289 113
- US-A- 4 709 318

## Description

The present invention relates to a power generating device, and more particularly, to a power generating device in which it is possible to replenish the deficiency by electric power from a battery when the output of the power generating device such as an engine generator becomes insufficient.

A power generating device such as an engine generator has diffused intowidespreadpractice as a power supply device for various kinds of uses such as portable use and emergency one. When a load by which a large electric current temporarily flows when a load of a mercury lamp, that of an electric motor, and the like are started is connected to a relatively small power generating device such as an engine generator, an overloaded state is temporarily occurred and the engine speed and the rotation speed of the generator are reduced to cause a stall (engine stall), in some cases. That is, when the overloaded state is temporarily occurred, the engine speed is reduced to cause reduction in the output of the power generating device by the reduction to cause a further overloaded state. Then, the vicious cycle causes a stall.

In order to solve the above problem, there has been made an proposal by which the load is limited within a range, in which the engine can be kept at an operation state at the maximum output, to eliminate the overloaded state as soon as possible. There has been disclosed, for example, in the Japanese Patent Publication No. 2740567, an engine speed control device, in which an engine is controlled by reduction in a load to be kept at an operation state at, approximately, the maximum output, when it is not determined that the engine speed is not increased at a rate of a predetermined value or more though it is determined that a feed rate of fuel to the engine is approximately the maximum.

As described in the above-described patent publication, effective use of the maximum output of the engine can be realized by limiting the load within a range in which the engine can be kept at an operation state at the maximum output. However, since this results in that the output is temporarily limited, shortage of electric power temporarily occurs from a viewpoint of the load side, which is not preferable for the load.

From EP-A-1,289,113 an automotive alternator is known which comprises a rectifier connected to an alternator driven by the engine of a vehicle. The rectifier is connected to a battery of the vehicle.

From US 4,709,318 an uninterruptible power supply unit is known which comprises a converter the AC side of which is connectable with line power and the DC side of which is coupled with a node coupled to an output DC to AC converter the AC side of which is connectable with a load. Additionally, the node is coupled to a DC to DC converter which operates bi-directionally in conjunction with a rechargeable battery supply.

The object of the present invention is to provide a power generating device which can meet the demand for output shortage even when an overloaded state is temporarily occurred.

This object is solved in accordance with the present invention as defined in claim 1. Advantageous embodiments are given in the dependent claims.

A power generating device according to the present invention comprises a generator, a rectifier circuit which rectifies the output of the generator, and an inverter which converts the output of the rectifier circuit into AC power of a predetermined frequency for output, wherein a two-way DC-DC converter is provided between the output side of the rectifier circuit and the output terminal of a battery.

A regulator is providedbetween the rectifier circuit and the inverter, and the two-way DC-DC converter is connected between a node between the rectifier circuit and the regulator, and the output terminal of the battery.

According to an embodiment of the present invention,

the two-way DC-DC converter comprises: a terminal for a low-voltage side; a terminal for a high-voltage side; a transformer including a winding wire for the low-voltage side and a winding wire for the high-voltage side; a switching element for the low-voltage side inserted between the terminal for the low-voltage side and the winding wire for the low-voltage side; a switching element for the high-voltage side inserted between the terminal for the high-voltage side and the winding wire for the high-voltage side; a rectifying element for the low-voltage side connected in parallel with the switching element for the low-voltage side; a rectifying element for the high-voltage side connected in parallel with the switching element for the high-voltage side, and a control circuit which controls the switching element for the low-voltage side and the switching element for the high-voltage side, and two-way exchange of electric power between the output of the battery and that of the rectifier circuit by simultaneous driving of the switching element for the low-voltage side and the switching element for the high-voltage side. Preferably, the power generating device has a configuration in which while monitoring the charged state of the battery, driving of the switching element for the higher voltage side is stopped when it is determined that the battery is in an overloaded state.

According to an embodiment of the present invention, the power generating device has a configuration in which, while monitoring the output voltage of the rectifier circuit, driving of the switching element for the lower voltage side is started when it is determined that the output voltage is reduced to a value smaller than a predetermined value.

Advantageously two-way exchange of electric power between the output of a rectifier circuit and that of a battery through a two-way DC-DC converter is executed, depending on the voltage on the output side of the rectifier circuit. That is, it is possible to supply deficiency by electric power from the battery when the output of the rectifier circuit is reduced in an overloaded state, and it is possible to charge the battery when the output of the rectifier circuit is enough.

Moreover, it is possible to realize stable operation of an inverter, because fluctuations in the output of the two-way DC-DC converter is absorbed By the regulator between the rectifier and the inverter, and it is possible not to exert effects of the fluctuations in the output to the inverter.

Furthermore, a simple configuration of the two-way DC-DC converter can be realized.

Moreover, the reliability of the device can be improved, and it is possible to prolong the life of the battery, because the battery can be kept in a preferable state by preventing an overloaded or an over-discharged state of the battery.

In addition, supply of electric power from the battery can be started when the output of the generator cannot meet the demand for the load.

### BRIEF DESCRIPTION OF THE DRAWINGS

Fig. 1 is a block diagram showing a concept of a power generating device according to the present invention.
Fig. 2 is a circuit diagram showing a circuit realizing one embodiment of the power generating device according to the present invention.

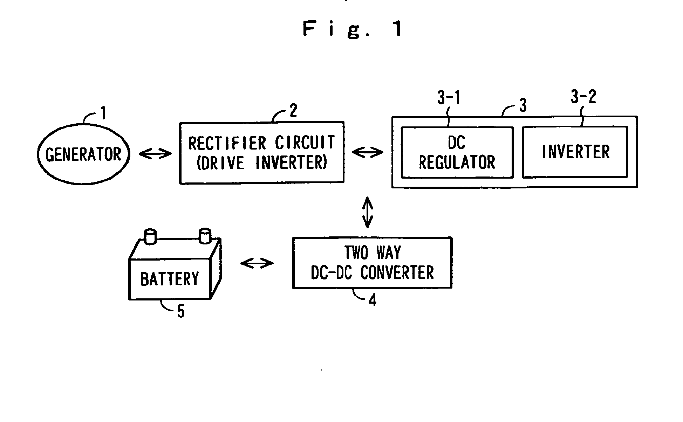

Hereinafter, the present invention will be explained in detail referring to drawings. Fig. 1 is a block diagram showing a concept of a power generating device according to the present invention. In the drawing, a generator 1 comprises, for example, a three-phase multipolar magnet generator. In the following embodiments, explanation will be made on the assumption that the generator 1 is connected to an engine, is an engine generator driven by the engine, and is a dual-purpose generator both for a generator function and for an electric motor function, which can be also operated as an engine starting electric motor.

A rectifier circuit 2 comprising a bridged rectifying element rectifies the output of the generator 1. Moreover, switching elements such as field effect transistors (FETs) are connected in parallel with each rectifying element in the rectifier circuit 2. These switching elements form a drive inverter by which a DC voltage is converted into a three-phase AC voltage by ON - OFF control of the switching elements for application to the generator 1. Here, the rectifying elements forming the rectifier circuit 2 may be a parasitic diode of the switching elements such as FET, or a joint diode which is separately connected.

An electronic power inverter section 3 comprises a DC regulator 3-1 and an inverter 3-2, and converts the output of the rectifier circuit 2 into AC power of a predetermined frequency for output. Here, it is possible not to exert effects of fluctuations in the output of a two-way DC-DC converter 4 to an inverter 3-2.

In the two-way converter 4, the voltage of a battery 5 is step upped, and the step-upped voltage is output to the output side of the rectifier circuit 2. Moreover, when the output of the rectifier circuit 2 is enough and a remaining quantity of the battery 5 is small, the battery 5 is charged by supplying the output of the rectifier circuit 2 to the battery 5. Hereinafter, the side of the battery 5 and that of a rectifier circuit 2 in the DC-DC converter 4 will be called as a primary side, and a secondary side, respectively. The battery 5 is, for example, a 12 V battery which has been generally used for a self starter.

Then, operations in Fig. 1 will be explained. The primary side and the secondary side of the two-way DC-DC converter 4 are driven in full synchronization with each other, that is, by the same drive signal. By this driving mode, automatic two-way power conversion is executed as described below in the two-way DC-DC converter 4.

When the engine is started, the DC voltage of the battery 5, which has been step-upped in the two-way DC-DC converter 4 according to relative difference in the voltage between the primary side and the secondary side caused by the turns ratio of the transformer of the two-way DC-DC converter 4, is applied to the drive inverter (rectifier circuit) 2. TheDC voltage is converted into a three-phase AC voltage by switching driving of the drive inverter 2, based on a starting command, and is applied to the generator 1. Thereby, the generator 1 is started as an engine starting electric motor.

When the engine is started, the generator 1 is driven by the engine to stop the switching operation of the drive inverter 2. The output of the generator 1 is rectified through the rectifier circuit (as a drive inverter) 2, is regulated through the DC regulator 3-1 in the electronic power inverter section 3, and is converted into AC power of a predetermined frequency in the inverter 3-2 for output.

In the case of no overloaded state, enough output is obtained from the rectifier circuit 2, and electric power is supplied to the load only by the generator 1. At this time electric power is not supplied from the battery 5 through the two-way DC-DC converter 4.

Since the two-way converter 4 is connected to the output side of the rectifier circuit 2, the battery 5 is automatically charged by the output of the rectifier circuit 2 through the two-way DC-DC converter 4, if the remaining quantity of the battery 5 is small at this time. That is, if the conversion output voltage of the battery is lower than the output voltage of the rectifier circuit 2, power conversion is executed in such a way that the battery 5 is charged with the output of the rectifier circuit 2, based on relative difference in the voltage between the primary side and the secondary side caused by the turns ratio of the transformer of the two-way DC-DC converter 4.

When the overloaded state is caused and the output of the generator 1 cannot meet the demand for the load in the state, the output of the rectifier circuit 2 is reduced. Along with the reduction in the output, automatic power conversion from the primary side to the secondary side of the two-wayDC-DC converter 4 is executed to cause a state in which electric power is supplied to the load from the battery 5. Accordingly, the conversion output of the battery 5 is superimposed onto that of the generator 1. That is, electric power is supplied to the load in the mode in which the generator 1 is assisted by the battery 5. Moreover, when the generator 1 is stopped for any reason, electric power is automatically supplied to the load only from the battery 5 through the two-way DC-DC converter 4 and the electronic power inverter section 3.

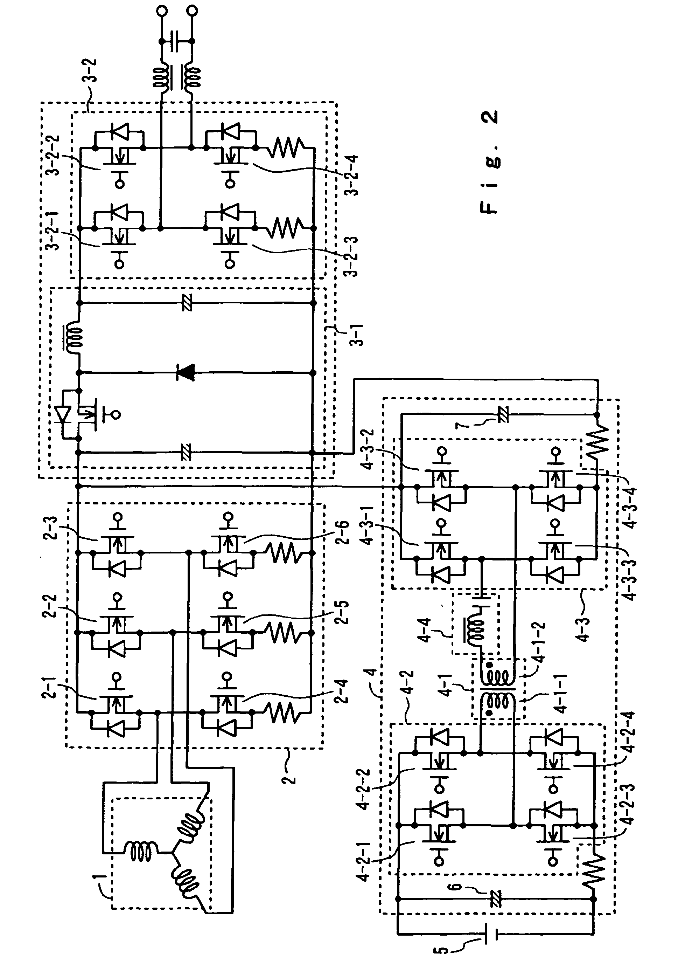

Fig. 2 is a circuit diagram showing a circuit realizing one embodiment of the power generating device according to the present invention, and the same parts as or parts similar to those previously described with reference to Fig. 1 are denoted by the same reference numbers as those in Fig. 1. The three-phase generator 1 is connected to an engine (not shown). The output side of the generator 1 is connected to the drive inverter. The drive inverter has a configuration in which, for example, six switching elements (hereinafter, called as FETs), such as FETs, 2-1 through 2-6 are bridged.

Rectifying elements such as a diode are connected in parallel with each FET 2-1 through 2-6. The rectifying elements may be a parasitic diode of FETs, or a joint diode which is separately connected, and the rectifier circuit 2 comprises the rectifying elements.

The output side of the rectifier circuit 2 is connected to the electronic power inverter section 3 comprising the DC regulator 3-1 and the inverter 3-2. The DC regulator 3-1 includes, for example, a FET, a choke coil, a capacitor, a diode, and the like, and the inverter 3-2 has a configuration in which, for example, four FETs 3-2-1 through 3-2-4 are bridged.

A node between the rectifier circuit 2 and the electronic power inverter section 3 is connected to the secondary side of the two-way DC-DC converter 4 and the primary side of the DC-DC converter 4 is connected to the battery 5 comprising, for example, a battery (12 V).

The two-way DC-DC converter 4 is provided for two-way exchange of electric power between the output of the battery 5 and that of the rectifier circuit 2, and comprises a transformer 4-1 provided with a winding wire 4-1-1 for the low-voltage side as the primary side and a winding wire 4-1-2 for the high-voltage side as the secondary side. The step-up voltage ratio of the two-way DC-DC converter 4 is defined by the turns ratio between the winding wire 4-1-1 for the low-voltage side and the winding wire 4-1-2 for the high-voltage side.

A switching section 4-2 for the lower voltage side and a switching section 4-3 for the higher voltage side are provided on the side of the winding wire 4-1-1 for the low-voltage side and the side of the winding wire 4-1-2 for the high-voltage side, respectively. The switching section 4-2 for the lower voltage side has a configuration in which, for example, four FETs 4-2-1 through 4-2-4 are bridged, and, similarly, the switching section 4-3 for the higher voltage side comprises four FETs 4-3-1 through 4-3-4.

Rectifying elements such as a diode are connected in parallel with each FET 4-2-1 through 4-2-4, and 4-3-1 through 4-3-4 in the switching section 4-2 for the lower voltage side and the switching section 4-3 for the higher voltage side, respectively. The rectifying elements may be a parasitic diode of FETs, or a joint diode which is separately connected. Assuming that the rectifying elements which have been connected in parallel could be treated as one unit, the switching section 4-2 for the lower voltage side and the switching section 4-3 for the higher voltage side could be considered to be a switching and rectifying section, respectively.

An LC resonant circuit 4-4 is provided on the side of the winding wire 4-1-2 for the high-voltage side of the transformer 4-1. An LC resonant circuit 4-4 has a function by which a current which flows when at least one of the switching section 4-2 for the lower voltage side and the switching section 4-3 for the higher voltage side is driven is changed to a sinusoidal current, and switching losses are reduced, and destruction of FETs by a large current are prevented. The reason is that ON - OFF control of FETs can be executed approximately at a point crossing the zero level of the sinusoidal current. Here, the LC resonant circuit 4-4 may be provided not on the secondary side, but on the primary side.

Switching control of FETs 4-2-1 through 4-2-4 in the switching section 4-2 for the lower voltage side and FETs 4-3-1 through 4-3-4 in the switching section 4-3 for the higher voltage side is executed by a control circuit (not shown) comprising a CPU and the like. Here, capacitors 6, 7 connected to the primary side and the secondary side, respectively, are a capacitor for output smoothing.

Then, operations in Fig. 2 will be explained. In order to execute automatic two-way power conversion in the two-way DC-DC converter 4, the switching section 4-2 for the lower voltage side and the switching section 4-3 for the higher voltage side are driven in full synchronization with each other, that is, by the same drive signal. As is commonly known, this driving is executed by alternate ON - OFF control between a pair of FET 4-2-1 and FET 4-2-4, and a pair of FET 4-2-2 and FET 4-2-3 in the switching section 4-2 for the lower voltage side, and by alternate ON - OFF control between a pair of FET 4-3-1 and FET 4-3-4, and a pair of FET 4-3-2 and FET 4-3-3 in the switching section 4-3 for the higher voltage side.

When the engine is started, power conversion from the primary side to the secondary side of the two-way DC-DC converter 4 is executed, and the DC voltage of the battery 5, which has been step-upped by the above conversion is applied to the drive inverter (rectifier circuit) 2. By the drive inverter 2, the DC voltage is converted into a three-phase AC voltage, and is applied to the generator 1. Thereby, the generator 1 is started as an engine starting electric motor. This driving is executed by pulse-width-modulation (PWM) driving of FETs 2-1 through 2-6 in the drive inverter. At this time, phase discrimination is executed by using changes in the current distribution caused by a counter-electromotive voltage according to the operation of the generator (electric motor) 1 to execute sensor-less synchronous driving.

When the engine is started, the generator 1 is driven by the engine to generate the output. The output of the generator 1 is rectified in the rectifier circuit (the drive inverter) 2. At this time, FETs 2-1 through 2-6, which form the drive inverter, are not driven, and full-wave rectification of the output of the generator 1 is executed with the rectifying elements in the rectifier circuit 2. The output of the rectifier circuit 2 is rectified and smoothed by the DC regulator 3-1, and is converted into AC power of a predetermined frequency in the inverter 3-2 for output. Driving of the DC regulator for is executed by PWM driving of, for example, FETs.

If the remaining quantity of the battery 5 is small at this time, power conversion from the secondary side to the primary side is executed in the two-way DC-DC converter 4, and the battery 5 is charged by the reduced output of the rectifier circuit 3. Moreover, when the overloaded state is caused and the output of the generator 1 cannot meet the demand for the load in the state, power conversion is executed in such a way that electric power is also supplied from the battery 5 through the two-way DC-DC converter 4.

Thus, automatic power exchange between the primary side and the secondary side is executed in the two-way DC-DC converter 4 according to relative difference in the voltage between the primary side and the secondary side caused by the turns ratio of the transformer 4-1, and two-way exchange of the electric power between both the sides is executed.

Though the embodiments have been explained as described above, various kinds of changes and modifications could be made.
Sufficiently, the two-way DC-DC converter 4 is driven, when the engine is started, for example, in such a way that one-way power conversion from the primary side to the secondary side is executed.

Moreover, according to one configuration, while monitoring the charged state of the battery 5 based on the battery voltage and the battery current, driving of the switching section 4-3 for the higher voltage side is stopped when it is determined that the battery is in an overloaded state, and driving of the switching section 4-2 for the lower voltage side is stopped when it is determined that the battery is in an over-discharged state. Thereby, the battery 5 can be kept in a preferable state. Here, the remaining quantity of the battery 5 can be judged by a value of internal resistance estimated from the temperature and the current of the battery 5, or by an electromotive voltage estimated from fluctuations in the current and the voltage.

Moreover, two-way power conversion from the primary side to the secondary side, or from the secondary side to the primary side can be suitably configured to be executed not by driving the switching section 4-2 for the lower voltage side and the switching section 4-3 for the higher voltage side in full synchronization with each other, but by selective driving of the sections.

There can be a configuration, for example, in which, while monitoring the output voltage of the rectifier circuit 2, driving of the switching section 4-2 for the lower voltage side is started when it is determined that the output voltage is reduced to a value smaller than a predetermined value. According to the above configuration, electric power can be supplied from the battery 5 to the load for assisting the generator when the overloaded state is caused and the output of the generator 1 cannot meet the demand for the load in the state.

Furthermore, the present invention is not limited to the engine generator, and is also applied to a common generator in which the output of the common generator is assisted by a battery to meet the demand for overloaded conditions. In this case, the switching elements are not required to be connected in parallel with the rectifying elements in the rectifier circuit 2, and the rectifier circuit 2 is required only to rectify the output of the generator 1.

As explained in detail above, according to the present invention, two-way exchange of the electric power between the output of a rectifier circuit and that of a battery through a two-way DC-DC converter is executed, depending on the voltage on the output side of the rectifier circuit. That is, it is possible automatically to replenish deficiency by electric power from the battery when the output of the rectifier circuit is reduced in an overloaded state, and it is possible automatically to charge the battery when the output of the rectifier circuit is enough.

Moreover, according to a configuration in which, while monitoring the output of the rectifier circuit and that of thebattery, driving control of the two-way DC-DC converter is executed, depending on the monitoring results, it is possible to meet the demand for overloaded conditions, and, also, the battery can be kept in a preferable state by preventing an overloaded or an over-discharged state of the battery.

## Claims

1. A power generating device comprising a generator (1), a rectifier circuit (2) which rectifies the output of the generator (1), and an inverter (3-2) which converts the output of the rectifier circuit (2) into AC power of a predetermined frequency for output, **characterized in that**
a regulator (3-1) is provided between the rectifier circuit (2) and the inverter (3-2), and
a two-way DC-DC converter (4) is connected between a node between the rectifier circuit (2) and the regulator (3-1), and the output terminal of the battery (5)

2. The power generating device according to claim 1, wherein
the two-way DC-DC converter (4) comprises: a terminal for a low-voltage side; a terminal for a high-voltage side; a transformer (4-1) including a winding wire (4-1-1) for the low-voltage side and a winding wire (4-1-2) for the high-voltage side; a switching element (4-2-1 through 4-2-4) for the low-voltage side inserted between the terminal for the low-voltage side and the winding wire (4-1-1) for the low-voltage side; a switching element (4-3-1 through 4-3-4) for the high-voltage side inserted between the terminal for the high-voltage side and the winding wire (4-1-2) for the high-voltage side; a rectifying element for the low-voltage side connected in parallel with the switching element (4-2-1 through 4-2-4) for the low-voltage side; a rectifying element for the high-voltage side connected in parallel with the switching element (4-3-1 through 4-3-4) for the high-voltage side, and a control circuit which controls the switching element (4-2-1 through 4-2-4) for the low-voltage side and the switching element (4-3-1 through 4-3-4) for the high-voltage side, and
two-way exchange of electric power between the output of the battery (5) and that of the rectifier circuit (2) by simultaneous driving of the switching element (4-2-1 through 4-2-4) for the low-voltage side and the switching element (4-3-1 through 4-3-4) for the high-voltage side.

3. The power generating device according to claim 2, wherein the device has a configuration in which, while monitoring the charged state of the battery (5), driving of the switching element (4-3-1 through 4-3-4) for the higher voltage side is stopped when it is determined that the battery (5) is in an overloaded state.

4. The power generating device according to claim 2, wherein the device has a configuration in which, while monitoring the output voltage of the rectifier circuit, driving of the switching element (4-2-1 through 4-2-4) for the lower voltage side is started when it is determined that the output voltage is reduced to a value smaller than a predetermined value.

## Patentansprüche

1. Leistung-erzeugendes Gerät mit einem Generator (1), einer Gleichrichterschaltung (2), die die Ausgabe des Generators (1) gleichrichtet und einem Wechselrichter (3-2), der die Ausgabe der Gleichrichterschaltung (2) in eine Wechselstromleistung einer vorbestimmten Frequenz zur Ausgabe umwandelt, **gekennzeichnet dadurch, dass**
ein Regler (3-1) zwischen der Gleichrichterschaltung (2) und dem Wechselrichter (3-2) bereitgestellt ist, und
ein Zweiwege-Gleichstrom-Gleichstrom-Umwandler (4) zwischen einem Knoten zwischen der Gleichrichterschaltung (2) und dem Regler (3-1) und dem Ausgabeanschluss der Batterie (5) verbunden ist.

2. Leistung-erzeugendes Gerät nach Anspruch 1, wobei
der Zweiwege-Gleichstrom-Gleichstrom-Umwandler (4) umfasst:
einen Anschluss für eine Niederspannungsseite;
einen Anschluss für eine Hochspannungsseite;
einen Transformator (4-1) einschließlich eines Wicklungsdrahtes (4-1-1) für die Niederspannungsseite und eines Wicklungsdrahtes (4-1-2) für die Hochspannungsseite;
ein Schaltelement (4-2-1 bis 4-2-4) für die Niederspannungsseite, das zwischen dem Anschluss für die Niederspannungsseite und dem Wicklungsdraht (4-1-1) für die Niederspannungsseite eingesetzt ist;
ein Schaltelement (4-3-1 bis 4-3-4) für die Hochspannungsseite, das zwischen dem Anschluss für die Hochspannungsseite und dem Wicklungsdraht (4-1-2) für die Hochspannungsseite eingesetzt ist;
ein gleichrichtendes Element für die Niederspannungsseite, das parallel mit dem Schaltelement (4-2-1 bis 4-2-4) für die Niederspannungsseite verbunden ist;
ein gleichrichtendes Element für die Hochspannungsseite, das parallel mit dem Schaltelement (4-3-1 bis 4-3-4) für die Hochspannungsseite verbunden ist und
eine Steuerschaltung, die das Schaltelement (4-2-1 bis 4-2-4) für die Niederspannungsseite und das Schaltelement (4-3-1 bis 4-3-4) für die Hochspannungsseite steuert, und
einen Zweiwegeaustausch von elektrischer Leistung zwischen der Ausgabe der Batterie (5) und jener der Gleichrichterschaltung (2) durch gleichzeitiges Ansteuern des Schaltelementes (4-2-1 bis 4-2-4) für die Niederspannungsseite und des Schaltelements (4-3-1 bis 4-3-4) für die Hochspannungsseite.

3. Leistung-erzeugendes Gerät nach Anspruch 2, wobei das Gerät eine Konfiguration aufweist, in der, während der geladene Zustand der Batterie (5) überwacht wird, ein Ansteuern des Schaltelements (4-3-1 bis 4-3-4) für die höhere Spannungsseite gestoppt wird, wenn es bestimmt wird, dass sich die Batterie (5) in einem überladenen Zustand befindet.

4. Leistung-erzeugendes Gerät nach Anspruch 2, wobei das Gerät eine Konfiguration aufweist, in der, während die Spannung der Gleichrichterschaltung überwacht wird, ein Ansteuern des Schaltelements (4-2-1 bis 4-2-4) für die niedrigere Spannungsseite gestartet wird, wenn es bestimmt wird, dass die Ausgabespannung auf einen Wert verringert ist, der kleiner als ein vorbestimmter Wert ist.

## Revendications

1. Dispositif de production d'énergie comprenant un générateur (1), un circuit redresseur (2) qui redresse la sortie du générateur (1), et un onduleur (3-2) qui convertit la sortie du circuit redresseur (2) en courant alternatif d'une fréquence prédéterminée pour être délivré en sortie, **caractérisé en ce que**
un régulateur (3-1) est pourvu entre le circuit redresseur (2) et l'onduleur (3-2), et
un convertisseur bidirectionnel courant continu-courant continu (4) est connecté entre un noeud entre le circuit redresseur (2) et le régulateur (3-1), et la borne de sortie de la batterie (5)

2. Dispositif de production d'énergie selon la revendication 1, dans lequel
le convertisseur bidirectionnel courant continu-courant continu (4) comprend: une borne pour un côté basse tension électrique; une borne pour un côté haute tension électrique; un transformateur (4-1) incluant un fil d'enroulement (4-1-1) pour le côté basse tension électrique et un fil d'enroulement (4-1-2) pour le côté haute tension électrique; un élément de commutation (4-2-1 à 4-2-4) pour le côté basse tension électrique inséré entre la borne pour le côté basse tension électrique et le fil d'enroulement (4-1-1) pour le côté basse tension électrique; un élément de commutation (4-3-1 à 4-3-4) pour le côté haute tension électrique inséré entre la borne pour le côté haute tension électrique et le fil d'enroulement (4-1-2) pour le côté haute tension électrique; un élément de redressement pour le côté basse tension électrique connecté en parallèle avec l'élément de commutation (4-2-1 à 4-2-4) pour le côté basse tension électrique; un élément de redressement pour le côté haute tension électrique connecté en parallèle avec l'élément de commutation (4-3-1 à 4-3-4) pour le côté haute tension électrique, et un circuit de commande qui commande l'élément de commutation (4-2-1 à 4-2-4) pour le côté basse tension électrique et l'élément de commutation (4-3-1 à 4-3-4) pour le côté haute tension électrique, et
un échange d'énergie électrique bidirectionnel entre la sortie de la batterie (5) et celle du circuit redresseur (2) par une commande simultanée de l'élément de commutation (4-2-1 à 4-2-4) pour le côté basse tension électrique et l'élément de commutation (4-3-1 à 4-3-4) pour le côté haute tension électrique.

3. Disposition de génération d'énergie selon la revendication 2, dans lequel le dispositif a une configuration dans laquelle, tout en surveillant l'état de chargement de la batterie (5), la commande de l'élément de commutation (4-3-1 à 4-3-4) pour le côté tension électrique plus élevée est arrêtée lorsque l'on détermine que la batterie (5) se trouve dans un état de surcharge.

4. Disposition de génération d'énergie selon la revendication 2, dans lequel le dispositif a une configuration dans laquelle, tout en surveillant la tension électrique de sortie du circuit redresseur, la commande de l'élément de commutation (4-2-1 à 4-2-4) pour le côté tension électrique plus basse est démarrée lorsque l'on détermine que la tension électrique de sortie est réduite à une valeur plus petite qu'une valeur prédéterminée.
